# FASCICULE DE BREVET EUROPEEN

(11) **EP 0 595 699 B1**
(45) Date de publication et mention de la délivrance du brevet: **10.07.1996**
(21) Numéro de dépôt: 93402605.5
(22) Date de dépôt: 22.10.1993
(51) Int. Cl.: B60H 1/00, B60H 1/03

(54) **Dispositif de refroidissement et de climatisation pour véhicule électrique**
Stellgerät an Kühl- und Klimaanlage für ein Elektrofahrzeug
Cooling and airconditioning device for an electric vehicle

(30) Priorité: 26.10.1992 FR 9212739
(43) Date de publication de la demande: 04.05.1994
(73) Titulaire: Valeo Climatisation, 78321 La Verrière (FR)
(72) Inventeur: Sarbach, Jean-Charles, F-78690 Les Essarts le Roi (FR)
(74) Mandataire: Gamonal, Didier

(56) Documents cités:
- EP-A- 0 538 131
- WO-A-92/16389
- FR-A- 2 373 017
- US-A- 2 780 077
- US-A- 4 450 898
- US-A- 4 459 466

## Description

L'invention concerne un dispositif pour le refroidissement du moteur de traction/propulsion et pour le chauffage et/ou la ventilation, ou la climatisation, de l'habitacle d'un véhicule, comprenant un radiateur de refroidissement du moteur et de chauffage de l'habitacle et un pulseur pour produire un courant d'air de ventilation provenant de l'habitacle et/ou de l'extérieur, ainsi qu'un organe de réglage d'entrée d'air permettant de faire varier de 0 à 100% un premier rapport entre le débit d'air prélevé à l'extérieur du véhicule et le débit total produit par le pulseur, un organe de réglage de sortie d'air permettant de fermer et d'ouvrir progressivement une sortie d'air vers l'extérieur du véhicule, et un organe de mixage permettant de faire varier de 0 à 100% un second rapport représentant la fraction de débit d'air venant au contact d'une source de chaleur, placée en aval du pulseur, par rapport au débit d'air envoyé dans l'habitacle.

De tels dispositifs sont utilisés en particulier dans des véhicules à traction/propulsion électrique, la source de chaleur comprenant une source auxiliaire, par exemple électrique, qui est mise en service lorsque la chaleur dégagée par le moteur électrique de traction et ses équipements annexes n'est pas suffisante pour assurer le chauffage de l'habitacle (EP-A-0 595 699).

Un but de l'invention est d'assurer une commande coordonnée des différents organes réglables du dispositif, répondant de façon optimale à toutes les conditions d'utilisation.

Un autre but est de minimiser la dépense d'énergie du dispositif, allongeant ainsi l'autonomie dans le cas d'un véhicule électrique.

L'invention vise notamment un dispositif du genre défini en introduction, dans lequel:
a) l'organe de réglage d'entrée d'air est placé en amont du pulseur,
b) ladite source de chaleur comprend le radiateur de refroidissement,
c) l'air circule librement du pulseur à la source de chaleur et, en aval de celle-ci, est soit évacué vers l'extérieur, soit envoyé vers l'habitacle par des trajets qui peuvent être obturés par l'organe de réglage de sortie d'air et par l'organe de mixage respectivement,
d) les positions des deux organes de réglage et de l'organe de mixage et le débit du pulseur sont commandés par un organe de commande mobile selon une course univoque comportant
   - une première portion le long de laquelle le premier rapport varie d'une valeur voisine mais distincte de 100% à 0, l'organe de réglage de sortie d'air reste entièrement ouvert, le second rapport reste égal à 0 et le débit du pulseur varie progressivement d'une valeur maximale à une valeur minimale, et
   - une seconde portion le long de laquelle le premier rapport varie de 0 à 100%, l'organe de réglage de sortie d'air se déplace progressivement de sa position de pleine ouverture à sa position de fermeture, le second rapport varie progressivement de 0 à 100% et le débit du pulseur augmente progressivement à partir de ladite valeur minimale.

D'autres caractéristiques, complémentaires ou alternatives, du dispositif selon l'invention sont énoncées ci-après :
- Il comprend un appareil de climatisation comportant un évaporateur interposé entre le pulseur d'une part, la source de chaleur et l'organe de mixage d'autre part, cet appareil étant commandé par l'organe de commande de façon à fonctionner seulement dans la seconde portion de ladite course.
- La source de chaleur comprend en outre une source auxiliaire commandée par l'organe de commande, la seconde portion de ladite course étant subdivisée en une première sous-portion le long de laquelle la source auxiliaire est hors service et en une seconde sous-portion le long de laquelle la source auxiliaire est en service.
- La source auxiliaire dégage une puissance calorifique croissante le long de la seconde sous-portion.
- Le débit du pulseur atteint une valeur intermédiaire à la fin de la première sous-portion et ladite valeur maximale à la fin de la seconde sous-portion.
- La source auxiliaire est un radiateur électrique.
- Il comprend une première branche de circuit d'air contenant le pulseur et le cas échéant l'évaporateur et se raccordant en amont à une entrée d'air recirculé et à une entrée d'air extérieur, commandées par l'organe de réglage d'entrée d'air, et en aval à des sorties d'air vers l'habitacle, et une seconde branche de circuit d'air disposée en dérivation sur la première branche, en aval du pulseur et le cas échéant de l'évaporateur, et contenant la source de chaleur, l'organe de mixage étant propre à obturer dans ses deux positions extrêmes respectivement la première branche et la jonction aval entre les deux branches, et l'organe de réglage de sortie d'air commandant une sortie d'air vers l'extérieur qui s'ouvre dans la seconde branche, en aval de la source de chaleur.

D'autres caractéristiques et avantages de l'invention apparaîtront à l'examen de la description détaillée ci-après, et des dessins annexés, sur lesquels :
les figures 1, 2, 3, 4, 5 et 6 représentent schématiquement certains éléments d'un dispositif selon l'invention, respectivement dans six états de fonctionnement différents ; et
- les figures 1a, 2a, 3a, 4a, 5a et 6a montrent les positions d'un organe de commande correspondant respectivement à ces six états de fonctionnement.

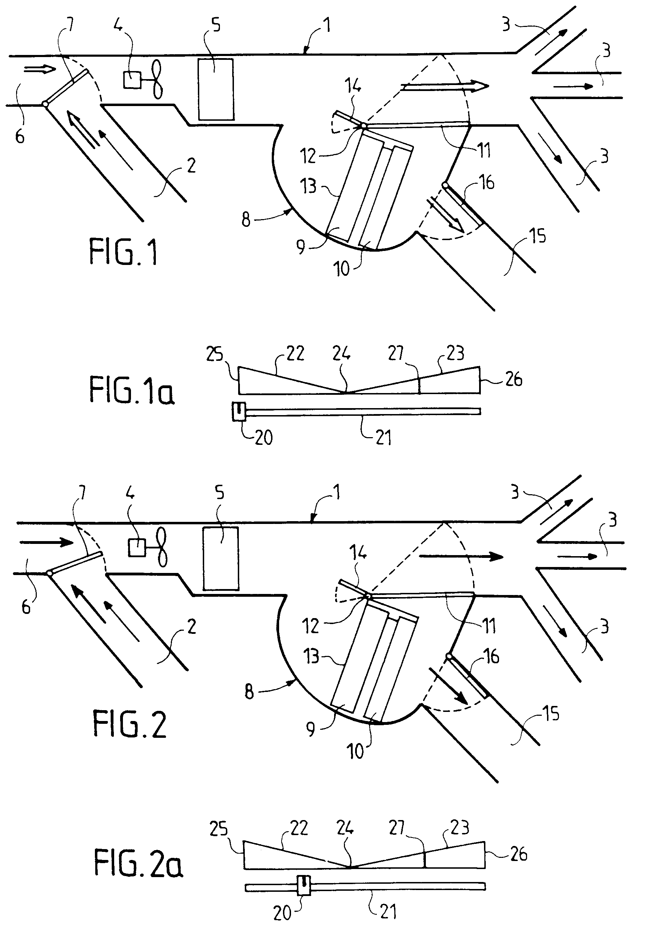

Les figures 1 à 6 montrent le circuit d'air d'un dispositif de refroidissement du moteur de traction/propulsion électrique d'un véhicule, et de climatisation de l'habitacle de ce véhicule. Ce circuit d'air comprend une branche principale 1 s'étendant entre une entrée d'air recirculé 2 reliée à l'habitacle, notamment à la partie arrière de celui-ci, et des sorties 3 vers l'habitacle, notamment à la base du pare-brise, sur le tableau de bord et à la partie inférieure de l'habitacle. Cette branche 1 forme donc avec l'habitacle une boucle fermée. Elle contient un pulseur 4 et, en aval de celui-ci, c'est-à-dire entre le pulseur et les sorties 3, un évaporateur 5 faisant partie d'un circuit de fluide réfrigérant non représenté dans son ensemble.

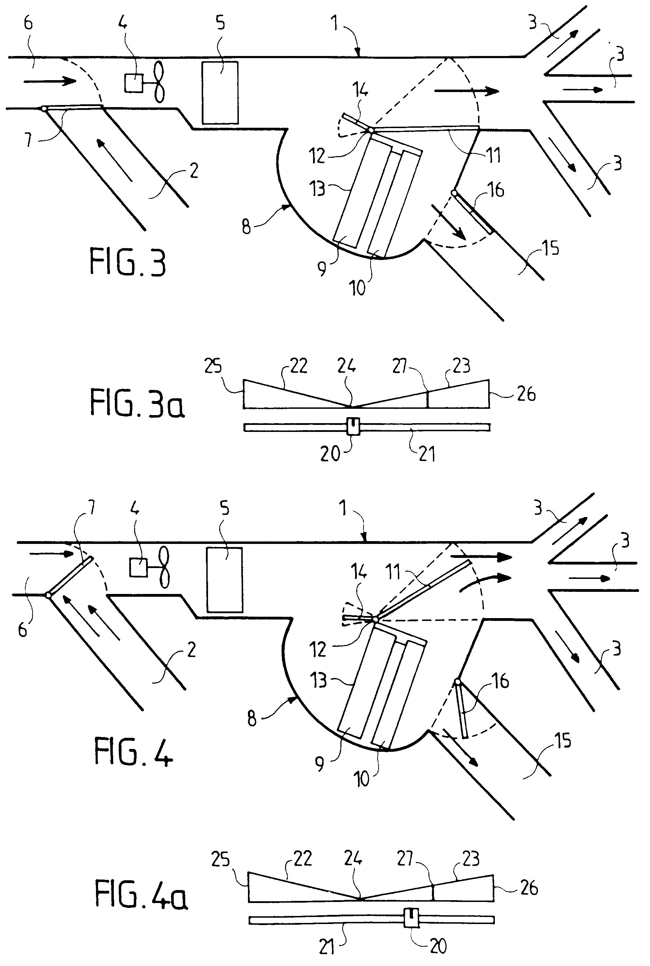

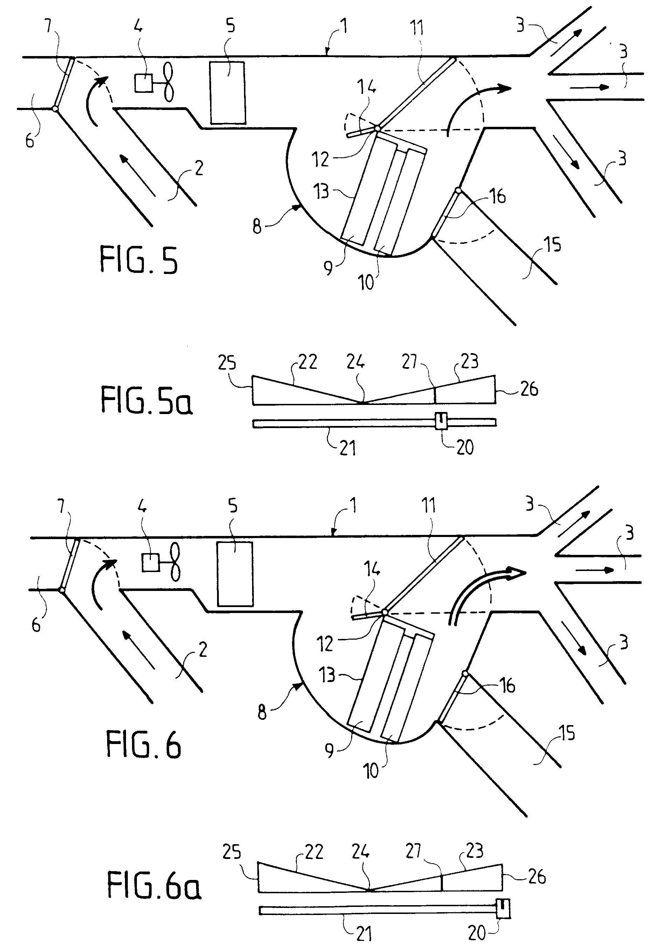

Une entrée d'air extérieur 6 s'ouvre dans la branche 1, en amont du pulseur 4, et un volet d'entrée d'air 7 peut pivoter entre une première position, représentée aux figures 5 et 6, où il obture l'entrée d'air extérieur 6 et une seconde position, illustrée à la figure 3, dans laquelle il obture l'entrée d'air recirculé 2, faisant ainsi varier de 0 à 100% le rapport entre le débit d'air prélevé à l'extérieur du véhicule et le débit total produit par le pulseur.

Le circuit comprend également, en aval de l'évaporateur 5, une branche dérivée 8 sur toute la section transversale de laquelle s'étend un bloc formé de deux radiateurs disposés en série, à savoir un premier radiateur 9 dans lequel circule un fluide de refroidissement pour le moteur électrique de traction et pour ses équipements annexes (électronique de puissance, batterie d'alimentation) et un radiateur électrique auxiliaire 10 pour le chauffage de l'habitacle, notamment un radiateur à résistance électrique à coefficient de température positif. Les branches 1 et 8 sont séparées l'une de l'autre par un volet de mixage 11 pouvant pivoter autour d'un axe 12 qui s'étend selon le bord, tourné vers la branche 1, de la face 13 du bloc 9, 10 par laquelle entre l'air envoyé par le pulseur. Le volet 11 peut pivoter entre une première position, illustrée aux figures 1 à 3, dans laquelle il ferme la jonction aval entre les branches 1 et 8, interdisant ainsi l'envoi dans l'habitacle d'air chauffé par le bloc radiateur, et une seconde position, montrée aux figures 5 et 6, dans laquelle il obture la branche 1, entre ses deux jonctions avec la branche 8, obligeant au contraire l'air envoyé vers l'habitacle à traverser le bloc radiateur. Le volet 11 présente un appendice 14 qui s'étend vers l'amont à partir de l'axe 12 en formant un angle obtus avec la partie principale aval du volet. Cet appendice constitue un déflecteur qui favorise l'entrée d'air dans la branche 8 dans la première position du volet, et au contraire dans la branche 1 dans la seconde position de celui-ci. Dans cette dernière position, l'appendice 14 s'étend en travers de la branche 8, sur une fraction minoritaire de la section transversale de celle-ci.

Une sortie d'air 15 vers l'extérieur du véhicule débouche dans la branche 8, en aval du bloc 9, 10, et est munie d'un volet de réglage 16 pouvant se déplacer entre une position de fermeture illustrée aux figures 5 et 6 et une position de pleine ouverture montrée aux figures 1 à 3.

Le pulseur 4, l'appareil de climatisation comprenant l'évaporateur 5, le radiateur auxiliaire 10 et les volets 7, 11 et 16 sont commandés, par des moyens qui ne font pas partie de l'invention, à partir d'un organe de commande unique comprenant un curseur 20 (figures 1a à 6a), qui se déplace le long d'une fente horizontale 21 ménagée dans un tableau de commande du poste de conduite du véhicule, et qui peut être relié à un levier ou à un élément coulissant qui traverse la fente. Sur le tableau de commande, au-dessus de la fente 21, sont apposés des symboles graphiques servant de repères pour les différentes positions du curseur 20. Ces symboles comprennent un triangle de couleur bleue 22 et un triangle de couleur rouge 23 allongés dans la direction horizontale à partir d'un sommet commun 24 situé en regard d'une position moyenne du curseur 20, et dont les côtés respectifs 25 et 26 opposés à ce sommet sont situés en regard des extrémités gauche et droite respectivement de la course du curseur 20. Le triangle 23 est interrompu, entre le sommet 24 et le côté 26, par une étroite bande verticale 27 de la couleur du fond entourant les deux triangles. De la gauche vers la droite, le triangle bleu correspond à la commande du refroidissement de l'habitacle à une puissance décroissante, et le triangle rouge correspond à la commande du chauffage de l'habitacle à une puissance croissante.

Les figures 1 et la montrent la position du curseur 20, et les positions des volets qui en découlent, pour obtenir un refroidissement maximal de l'habitacle. L'appareil de climatisation est en service et le pulseur 4 est alimenté sous sa tension maximale, ce qui assure un débit maximal de chaleur cédée à l'évaporateur 5 par le courant d'air circulant dans la branche 1. Le volet de mixage 11 est dans sa première position, dégageant la branche 1 et permettant un libre accès de l'air refroidi aux sorties 3 vers l'habitacle. Le volet de sortie 16 est dans sa position de pleine ouverture, permettant l'évacuation vers l'extérieur du véhicule de l'air chauffé par le radiateur 9 servant au refroidissement du moteur de traction. Le volet d'entrée 7 est réglé de façon à permettre l'entrée d'air extérieur pour compenser cette sortie d'air chauffé, mais est plus proche de sa première position que de sa seconde position de façon que la majorité de l'air circulant dans la branche 1 soit de l'air recirculé.

Les figures 2 et 2a correspondent à une position du curseur 20 intermédiaire entre la position de refroidissement maximale montrée à la figure la et la position neutre montrée à la figure 3a. Le déplacement progressif du curseur dans cette première portion de sa course s'accompagne d'une diminution progressive de la tension d'alimentation du pulseur jusqu'à une valeur minimale et d'un déplacement progressif du volet 7 jusqu'à sa seconde position. Le débit d'air produit par le pulseur, le débit de chaleur cédée à l'évaporateur et le débit d'air circulant dans l'habitacle diminuent progressivement. Les positions des volets 11 et 16 sont inchangées.

Les figures 3 et 3a montrent la position neutre du curseur 20, atteinte à la fin de la première portion de sa course, et la position correspondante du volet 7. De plus, l'appareil de climatisation est hors service. Dans cette position, le dispositif sert exclusivement au refroidissement du moteur et de ses équipements annexes.

Les figures 4 et 4a sont relatives à une première sous-portion de la portion "chauffage" de la course du curseur 20, correspondant à un chauffage économique et se terminant en regard de la bande 27. Lorsque le curseur se déplace progressivement du point 24 à la bande 27, la tension d'alimentation du pulseur 4 augmente progressivement de sa valeur minimale à une valeur intermédiaire, le volet d'entrée 7 pivote de sa seconde position à sa première position, le volet 11 pivote de sa première position à sa seconde position, et le volet 16 pivote de sa position de pleine ouverture à sa position de fermeture. Bien entendu, l'appareil de climatisation reste hors service. On fait ainsi croître à la fois le débit d'air produit par le pulseur, la fraction de ce débit qui traverse le radiateur 9 et la fraction de ce même débit qui traverse l'habitacle. Il résulte de ces actions conjuguées une augmentation progressive du débit de chaleur fournie à l'habitacle.

A la figure 5a, le curseur 20 se trouve dans la seconde sous-portion de la portion "chauffage" de sa course, au-delà de la bande 27. Dans cette zone, comme montré par la figure 5, les positions des volets sont les positions finales de la zone précédente telles que définies ci-dessus. La tension d'alimentation du pulseur continue de croître jusqu'à sa valeur maximale, atteinte pour la position extrême du curseur 20 illustrée à la figure 6a. Le radiateur auxiliaire 10 est sous tension et fournit donc un débit de chaleur complémentaire. Dans le cas où le radiateur 10 présente une résistance à coefficient de température positif, la puissance qu'il dissipe croît également avec le débit d'air, ce qui augmente encore le débit de chaleur envoyée dans l'habitacle.

En variante, l'appareil de climatisation, et l'évaporateur 5 qui en fait partie, peut être supprimé, la commande des autres éléments étant inchangée à l'exclusion du volet 7 qui reste en pleine ouverture de l'entrée d'air 6. Dans la portion "froid" de la course de l'organe de commande, l'envoi d'air réfrigéré correspondant à un débit frigorifique décroissant est remplacé par une simple ventilation à un débit volumique décroissant. Ce dernier type de fonctionnement peut également être obtenu par la mise hors service d'un appareil de climatisation existant, indépendamment de la position de l'organe de commande 20, dans un but d'économie d'énergie, ou en cas de défaillance de cet appareil de climatisation.

L'organe de commande 20 destiné à être manoeuvré manuellement peut être remplacé par un organe de commande automatique piloté selon un programme préétabli.

## Revendications

1. Dispositif pour le refroidissement du moteur de traction/propulsion et pour le chauffage et/ou la ventilation, ou la climatisation, de l'habitacle d'un véhicule, comprenant un radiateur (9) de refroidissement du moteur et de chauffage de l'habitacle et un pulseur (4) pour produire un courant d'air de ventilation provenant de l'habitacle et/ou de l'extérieur, ainsi qu'un organe de réglage d'entrée d'air (7) permettant de faire varier de 0 à 100% un premier rapport entre le débit d'air prélevé à l'extérieur du véhicule et le débit total produit par le pulseur, un organe de réglage de sortie d'air (16) permettant de fermer et d'ouvrir progressivement une sortie d'air (15) vers l'extérieur du véhicule, et un organe de mixage (11) permettant de faire varier de 0 à 100% un second rapport représentant la fraction de débit d'air venant au contact d'une source de chaleur (9,10), placée en aval du pulseur, par rapport au débit d'air envoyé dans l'habitacle, caractérisé en ce que :
a) l'organe de réglage d'entrée d'air est placé en amont du pulseur,
b) ladite source de chaleur comprend le radiateur de refroidissement (9),
c) l'air circule librement du pulseur à la source de chaleur et, en aval de celle-ci, est soit évacué vers l'extérieur, soit envoyé vers l'habitacle par des trajets qui peuvent être obturés par l'organe de réglage de sortie d'air et par l'organe de mixage respectivement,
d) les positions des deux organes de réglage et de l'organe de mixage et le débit du pulseur sont commandés par un organe de commande (20) mobile selon une course univoque (25-26) comportant
- une première portion (25-24) le long de laquelle le premier rapport varie d'une valeur voisine mais distincte de 100% à 0, l'organe de réglage de sortie d'air reste entièrement ouvert, le second rapport reste égal à 0 et le débit du pulseur varie progressivement d'une valeur maximale à une valeur minimale, et
- une seconde portion (24-26) le long de laquelle le premier rapport varie de 0 à 100%, l'organe de réglage de sortie d'air se déplace progressivement de sa position de pleine ouverture à sa position de fermeture, le second rapport varie progressivement de 0 à 100% et le débit du pulseur augmente progressivement à partir de ladite valeur minimale.

2. Dispositif selon la revendication 1, caractérisé en ce qu'il comprend un appareil de climatisation comportant un évaporateur (5) interposé entre le pulseur d'une part, la source de chaleur et l'organe de mixage d'autre part, cet appareil étant commandé par l'organe de commande de façon à fonctionner seulement dans la seconde portion de ladite course.

3. Dispositif selon l'une des revendications 1 et 2, caractérisé en ce que la source de chaleur comprend en outre une source auxiliaire (10) commandée par l'organe de commande, la seconde portion de ladite course étant subdivisée en une première sous-portion (24-27) le long de laquelle la source auxiliaire est hors service et en une seconde sous-portion (27-26) le long de laquelle la source auxiliaire est en service.

4. Dispositif selon la revendication 3, caractérisé en ce que la source auxiliaire dégage une puissance calorifique croissante le long de la seconde sous-portion.

5. Dispositif selon l'une des revendications 3 et 4, caractérisé en ce que le débit du pulseur atteint une valeur intermédiaire à la fin de la première sous-portion et ladite valeur maximale à la fin de la seconde sous-portion.

6. Dispositif selon l'une des revendications précédentes, caractérisé en ce que la source auxiliaire est un radiateur électrique.

7. Dispositif selon l'une des revendications précédentes, caractérisé en ce qu'il comprend une première branche de circuit d'air contenant le pulseur et le cas échéant l'évaporateur et se raccordant en amont à une entrée d'air recirculé (2) et à une entrée d'air extérieur (6), commandées par l'organe de réglage d'entrée d'air (7), et en aval à des sorties d'air (3) vers l'habitacle, et une seconde branche de circuit d'air (8) disposée en dérivation sur la première branche, en aval du pulseur et le cas échéant de l'évaporateur, et contenant la source de chaleur, l'organe de mixage (11) étant propre à obturer dans ses deux positions extrêmes respectivement la première branche et la jonction aval entre les deux branches, et l'organe de réglage de sortie d'air (16) commandant une sortie d'air (15) vers l'extérieur qui s'ouvre dans la seconde branche, en aval de la source de chaleur.

## Claims

1. Apparatus for cooling the traction or propulsion motor of a vehicle and for the heating and/or ventilation, or air conditioning, of the cabin of a vehicle, comprising a radiator (9) for cooling the motor and for heating the cabin, and a blower (4) for producing a stream of ventilating air drawn from the cabin and/or from the outside, together with an air inlet regulating member (7) for varying from 0 to 100% a first ratio between the flow of air drawn from outside the vehicle and the total flow produced by the blower, with an air outlet regulating member (16) for progressively opening and closing an outlet (15) for exhausting air out of the vehicle, and a mixing member (11) for varying from 0 to 100% a second ratio which represents the fraction of the air flow coming into contact with a heat source (9, 10), located downstream of the blower, with respect to the flow of air delivered into the cabin, characterised in that:
(a) the air inlet regulating member is located upstream of the blower,
(b) the said heat source comprises the cooling radiator (9),
(c) the air flows freely from the blower to the heat source, and, downstream of the latter, is either evacuated out of the vehicle, or delivered towards the cabin along paths which are able to be obturated by the air outlet regulating member and by the said mixing member respectively,
(d) the positions of the two regulating members and of the mixing member, and the air flow output of the blower, are controlled by a control member (20) which is movable along a uniform course of travel (25-26) which comprises:
- a first portion (25-24) along which the said first ratio varies from a value close to, but distinct from, 100% to 0, the air outlet regulating member remains fully open, the said second ratio remains equal to 0, and the flow rate delivered by the blower varies progressively from a maximum value to a minimum value, and
- a second portion (24-26) along which the said first ratio varies from 0 to 100%, with the air outlet regulating member being displaced progressively from its fully open position to its closed position, the said second ratio varies progressively from 0 to 100%, and the flow rate delivered by the blower increases progressively from its said minimum value.

2. Apparatus according to Claim 1, characterised in that it comprises an air conditioning apparatus which includes an evaporator (5) interposed between the blower on one side and, on its other side, the heat source and mixing member, the said apparatus being controlled by the control member in such a way as to operate only in the second portion of the said course of travel.

3. Apparatus according to Claim 1 or Claim 2, characterised in that the heat source further includes an auxiliary source (10) controlled by the control member, the second portion of the said course of travel being subdivided into a first phase (24-27) along which the auxiliary source is out of service, and a second phase (27-26) along which the said auxiliary source is in service.

4. Apparatus according to Claim 3, characterised in that the auxiliary source produces a heat output which increases along the second phase.

5. Apparatus according to Claim 3 or Claim 4, characterised in that the flow rate delivered by the blower reaches an intermediate value at the end of the first phase, and the said maximum value at the end of the second phase.

6. Apparatus according to one of the preceding Claims, characterised in that the auxiliary source is an electric radiator.

7. Apparatus according to one of the preceding Claims, characterised in that it includes a first air circuit branch, containing the blower together with the evaporator, if any, and being connected upstream to a recirculated air inlet (2) and a fresh air inlet (6) which are controlled by the air inlet regulating member (7), and downstream to outlets (3) leading towards the cabin, and a second air circuit branch (8) which is branched from the first branch downstream of the blower and of the evaporator, if any, and which contains the heat source, with the mixing member (11) being arranged to obturate the first branch and the downstream junction between the two said branches, respectively, in its two extreme positions, and the air outlet regulating member (16) controlling an outlet (15), for exhausting air out of the vehicle, which is open into the second branch downstream of the heat source.

## Patentansprüche

1. Vorrichtung zur Kühlung des Fahr-/Antriebsmotors und zur Heizung und/oder Belüftung oder Klimatisierung des Fahrgastraums eines Fahrzeugs mit einem Kühler (9) zur Kühlung des Motors und zur Heizung des Fahrgastraums und einem Gebläse (4) zur Erzeugung eines aus dem Fahrgastraum und/oder von draußen kommenden Belüftungsluftstroms sowie mit einem Regelorgan für den Lufteinlaß (7), mit dem ein erstes Verhältnis zwischen dem außerhalb des Fahrzeugs aufgenommenen Luftdurchsatz und dem durch das Gebläse erzeugten Gesamtluftdurchsatz von 0 bis 100% verändert werden kann, einem Regelorgan für den Luftauslaß (15), mit dem ein Luftauslaß zum Außenbereich des Fahrzeugs allmählich verschlossen und geöffnet werden kann, und einem Mischorgan (11), mit dem ein zweites Verhältnis, das dem mit einer hinter dem Gebläse angeordneten Wärmequelle (9, 10) in Kontakt kommenden Teilluftdurchsatz, bezogen auf den in den Fahrgastraum eingeleiteten Luftdurchsatz, entspricht, von 0 bis 100% verändert werden kann , **dadurch gekennzeichnet,** daß:
a) das Regelorgan für den Lufteinlaß vor dem Gebläse angeordnet ist,
b) die besagte Wärmequelle den Kühler (9) umfaßt,
c) die Luft frei vom Gebläse zur Wärmequelle zirkuliert und hinter dieser entweder nach außen abgeleitet oder in den Fahrgastraum durch Bahnen eingeleitet wird, die durch das Regelorgan für den Luftauslaß bzw. durch das Mischorgan verschlossen werden können,
d) die Positionen der beiden Regelorgane und des Mischorgans und der Durchsatz des Gebläses durch ein bewegliches Steuerorgan (20) nach einem eindeutigen Verstellweg (25-26) gesteuert werden, der die folgenden Abschnitte umfaßt:
- einen ersten Abschnitt (25-24), über dessen Länge sich das erste Verhältnis von einem Wert nahe bei, aber verschieden von 100% bis 0 verändert, wobei das Regelorgan für den Luftauslaß vollständig geöffnet bleibt, während das zweite Verhältnis gleich 0 bleibt und der Durchsatz des Gebläses sich allmählich von einem Maximalwert zu einem Minimalwert verändert, und
- einen zweiten Abschnitt (24-26), über dessen Länge sich das erste Verhältnis von 0 bis 100% verändert, wobei sich das Regelorgan für den Luftauslaß allmählich von seiner Position mit vollständiger Öffnung bis zu seiner Schließposition verstellt, während sich das zweite Verhältnis allmählich von 0 bis 100% verändert und der Durchsatz des Gebläses allmählich von dem besagten Minimalwert aus zunimmt.

2. Vorrichtung nach Anspruch 1 , **dadurch gekennzeichnet,** daß sie eine Klimaanlage mit einem Verdampfer (5) umfaßt, der zwischen dem Gebläse einerseits und der Wärmequelle und dem Mischorgan andererseits angeordnet ist, wobei diese Anlage durch das Steuerorgan so gesteuert wird, daß sie nur im zweiten Abschnitt des besagten Verstellwegs funktioniert.

3. Vorrichtung nach einem der Ansprüche 1 und 2, **dadurch gekennzeichnet,** daß die Wärmequelle außerdem eine Hilfsquelle (10) umfaßt, die durch das Steuerorgan gesteuert wird, wobei der zweite Abschnitt des besagten Verstellwegs in einen ersten Teilabschnitt (24-27), über dessen Länge die Hilfsquelle ausgeschaltet ist, und einen zweiten Teilabschnitt (27-26) unterteilt ist, über dessen Länge die Hilfsquelle eingeschaltet ist.

4. Vorrichtung nach Anspruch 3 , **dadurch gekennzeichnet,** daß die Hilfsquelle eine über die Länge des zweiten Teilabschnitts zunehmende Wärmeleistung abgibt.

5. Vorrichtung nach einem der Ansprüche 3 und 4, **dadurch gekennzeichnet,** daß der Durchsatz des Gebläses einen Zwischenwert am Ende des ersten Teilabschnitts und den besagten Maximalwert am Ende des zweiten Teilabschnitts erreicht.

6. Vorrichtung nach einem der vorangehenden Ansprüche, **dadurch gekennzeichnet,** daß die Hilfsquelle ein elektrischer Radiator ist.

7. Vorrichtung nach einem der vorangehenden Ansprüche, **dadurch gekennzeichnet,** daß sie einen ersten Luftkreislaufstrang umfaßt, der das Gebläse und gegebenenfalls den Verdampfer enthält und der sich davor an einen Umlufteinlaß (2) und an einen Außenlufteinlaß (6) anschließt, die durch das Regelorgan für den Lufteinlaß (7) gesteuert werden, und dahinter an Luftauslässe (3) zum Fahrgastraum, sowie einen zweiten Luftkreislaufstrang (8), der in Abzweigung am ersten Strang hinter dem Gebläse und gegegebenenfalls dem Verdampfer angeordnet ist und die Wärmequelle enthält, wobei das Mischorgan (11) in seinen beiden jeweiligen Endpositionen den ersten Strang und die nachgeordnete Verbindungsstelle zwischen den beiden Strängen verschließen kann, und wobei das Regelorgan für den Luftauslaß (16) einen Luftauslaß (15) nach draußen steuert, der sich in den zweiten Strang, hinter der Wärmequelle öffnet.
